Europäisches Patentamt

**European Patent Office**

**Office européen des brevets**

(19)

(11) Veröffentlichungsnummer: **0 126 992**
**B1**

(12) **EUROPÄISCHE PATENTSCHRIFT**

(45) Veröffentlichungstag der Patentschrift:
14.05.86

(51) Int. Cl.⁴: **A 61 C 19/00**, B 05 C 17/00

(21) Anmeldenummer: **84104789.7**

(22) Anmeldetag: **28.04.84**

(54) Zahntechnische Vorrichtung zum Ausbringen von pulverförmigen Polymeren.

(30) Priorität: **03.05.83 DE 3316130**

(43) Veröffentlichungstag der Anmeldung:
**05.12.84 Patentblatt 84/49**

(45) Bekanntmachung des Hinweises auf die Patenterteilung:
**14.05.86 Patentblatt 86/20**

(84) Benannte Vertragsstaaten:
**AT CH DE FR GB IT LI SE**

(56) Entgegenhaltungen:
**DE - A - 2 511 566**
**DE - A - 2 941 326**
**DE - A - 3 039 415**
**DE - B - 1 275 723**
**DE - U - 8 217 950**
**GB - A - 2 065 233**
**US - A - 4 109 653**
**US - A - 4 240 566**
**US - A - 4 332 498**

(73) Patentinhaber: **Etablissement Dentaire IVOCLAR,
FL-9494 Schaan (LI)**

(72) Erfinder: **Grünenfelder, Robert, Meierhofstrasse 43,
FL-9490 Vaduz (LI)**

(74) Vertreter: **Patentanwälte Dipl.-Ing. Splanemann
Dipl.-Chem. Dr. B. Reitzner, Tal 13,
D-8000 München 2 (DE)**

ACTORUM AG

# Beschreibung

Die Erfindung betrifft eine zahntechnische Vorrichtung zum Ausbringen von pulverförmigen Polymeren der im Oberbegriff von Anspruch 1 und Anspruch 12 angegeben Art.

In der Zahntechnik, insbesondere der Orthodontie, wird zur Fertigung von orthodontischen Apparaten im wesentlichen die Streutechnik angewandt. Das Modell wird aus der Tropfflasche oder mittels einer Pipette an den Stellen, an denen Kunststoff aufgebracht werden soll, angefeuchtet und dann Kunststoff aus einer Streuflasche aufgebracht. Das aufgestreute Polymer wird dann wieder mit Monomer benetzt. Es wird dafür ein spezieller Kunststoff benötigt, der nicht zum Wegfliessen nach dem Anteigen neigt, was jedoch bei normalen Autopolymerisat der Fall ist. Bei Kieferregulierungsapparaten nimmt der Zahnarzt von dem Gebiss, dessen Zähne in die richtige Stellung gebracht werden sollen, einen Abdruck, und aus diesem wird ein Gipsmodell hergestellt. Anschliessend werden Drahtelemente auf der Bukkalseite des isolierten Gipsmodells fixiert. Gleichfalls wird die Dehnschraube lagegerecht auf dem Gipsmodell befestigt. Aus einer Kunststoffflasche mit einer feinen Tülle wird Polymerpulver von der palatinalen bzw. lingualen Zahnfläche her nach der Mitte hin aufgetragen und anschliessend mit Monomer benetzt, das sich ebenfalls in einer Spritzflasche mit einer sehr feinen Tülle befindet. Diese Massnahmen werden solange wiederholt, bis die Platte in gewünschter Form und Stärke unter Einschluss aller Halte- und Bewegungselemente vorliegt. Das Gipsmodell wird dann zusammen mit der modellierten Platte und den Stahlelementen in ein Druckpolymerisationsgerät gesetzt und auspolymerisiert. Die fertig polymerisierte Platte wird in üblicher Weise poliert und vom Zahnarzt dem Patienten eingesetzt. Durch Verstellen der Dehnschraube wird auf die Drähte eine Kraft ausgeübt, die sich auf die zu regulierenden Zähne folgerichtig überträgt. Diese Art der Herstellung der Kunststoffplatte ist umständlich und zeitraubend, zumal der Zahnarzt oder -techniker im ständigen Wechsel die Kunststoffflasche mit dem Polymerpulver und die Spritzflasche mit dem flüssigen Monomer in die Hand nehmen und abstellen muss, wobei sehr genau darauf zu achten ist, dass jeweils richtig dosiert wird. Durch den ständigen Wechsel der Flaschen wird jedoch die Konzentration auf den Arbeitsvorgang beeinträchtigt.

Es ist deshalb die Aufgabe der vorliegenden Erfindung, die Dosiermöglichkeit zu vereinfachen und zu beschleunigen und insbesondere eine feinfühligere und abgestimmtere Dosierung von Polymer und Monomer zu ermöglichen.

Zur Lösung dieser Aufgabe werden erfindungsgemäss die kennzeichnenden Merkmale von Anspruch 1 bzw. Anspruch 12 vorgeschlagen.

Die Vorrichtung ist insbesondere für die Fertigung von orthodontischen Kieferapparaten geeignet, aber kann auch überall dort Anwendung finden, wo eine Polymer/Monomer-Mischung benötigt wird, wie beispielsweise bei der Reparatur von Prothesen.

Die Dosierung sowohl des pulverförmigen Polymers als auch des flüssigen Monomers ist ausserordentlich feinfühlig möglich, wobei sich kleinste Mengen gezielt auf das Werkstück aufbringen lassen. Die Vorrichtung liegt ruhig in der Hand des Zahntechnikers bzw. -arztes, so dass allein die Bewegungsabläufe erheblich reduziert werden und eine grössere Konzentration auf das Werkstück möglich ist. Ein Hautkontakt entfällt. Der Materialverbrauch ist praktisch auf das notwendige Mindestmass reduziert. Durch die Reduzierung der Anzahl der Handhabungen ergibt sich auch eine Zeitersparnis.

Beide Absperrorgane werden vorteilhafterweise aufeiannder abgestimmt durch einen Kippschalter betätigt, der an dem Handstück angeordnet ist, in dem alle Stellorgane und Leitungen zusammengefasst sind. Das Handstück und der Kippschalter sind einer menschlichen Hand ergonometrisch angepasst.

Weitere vorteilhafte Ausgestaltungen der Erfindung sind in den Unteransprüchen unter Schutz gestellt.

In der Zeichnung ist ein Ausführungsbeispiel der Erfindung wiedergegeben, das anhand der nachfolgenden Beschreibung näher erläutert wird. Es zeigt:

Fig. 1 eine Draufsicht der Vorrichtung, und

Fig. 2 einen Schnitt gemäss Linie II-II in Fig. 1.

Bei dem dargestellten Ausführungsbeispiel ist ein Handstück 10 schematisch wiedergegeben, das in der Praxis entsprechend der Hand des Zahntechnikers ergonometrisch gestaltet ist.

Innerhalb des Handstücks 10 verlaufen in Längsrichtung eine erste Leitung 11 für ein pulverförmiges Polymer und eine zweite Leitung 21 für ein flüssiges Monomer. Die Leitungen 11 bzw. 21 verlaufen von einem Anschlussstutzen 12 bzw. 22 über einen Leitungsabschnitt 13 bzw. 23 zu einem Absperrorgan 14 bzw. 24 und enden an einem Ausbringmundstück 15 bzw. 25. Die Absperrorgane 14 bzw. 24 sind durch Hebel 16 bzw. 26 verstellbar, die in Ausnehmungen 17 bzw. 27 des Gehäuses des Handstücks 10 um Achsen 18 bzw. 28 schwenkbar gelagert sind und durch Stössel 19 bzw. 29 verstellt werden können, die durch einen einzigen Kippschalter 20 betätigbar sind, der um eine Achse 30 schwenkbar in dem Gehäuse des Handstücks 10 gelagert ist.

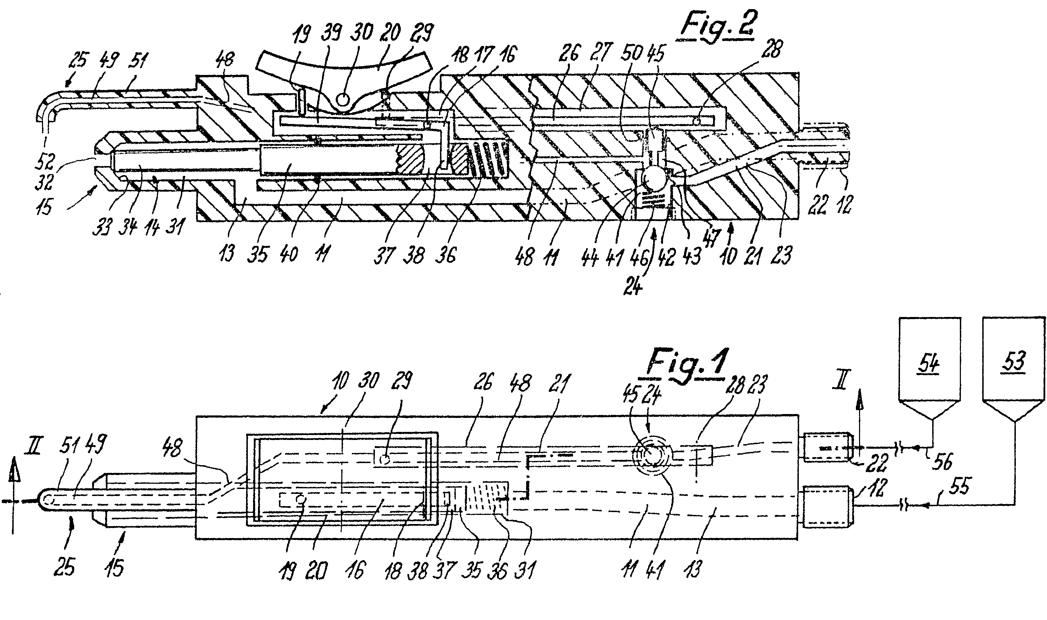

In Längsrichtung des Handstücks 10 ist ein Kanal 31 ausgebildet, der sich von dem Gehäuse des Handstücks 10 in das erste Ausbringmundstück 15 hinein erstreckt und einen Abschnitt der Leitung 11 bildet. Das freie Ende des Kanals 31 wird durch eine Mündung 32 zum Ausbringen des pulverförmigen Polymers gebildet. An der in Richtung des Kanals 31 weisenden Seite der Mündung 32 ist ein Ventilsitz 33 ausgebildet, auf dem in der Sperrstellung ein Ventilstössel 34 des Absperrorgans 14 ruht. Der Ventilstössel 34 ist an dem freien Ende eines Ventilkolbens 35 angeordnet, der innerhalb des Handstücks 10 in Längsrichtung gleitend geführt ist und unter der Wirkung einer Druckfeder 36 steht, die in der Sperrstellung den Ventilstössel 34 unter Anlage an dem Ventilsitz 33 hält. Der Ventilkolben 35 weist eine Ausnehmung 37 auf, in die ein Nocken 38 ragt, der an dem doppelarmig ausgebildeten Hebel 16 vorgesehen ist, der um die Achse 18 schwenkbar ist und dessen anderer Arm 39 an dem Stössel 19 anliegt. Durch die Druckfeder 36 werden das erste Absperrorgan 14 in der Sperrstellung und der Stössel 19 in seiner Ruhestellung gehalten, in der der Kippschalter 20 seine neutrale Lage einnimmt, wie in Fig. 2 gezeigt ist.

In der Wandung des Kanals 31 ist innerhalb des Handstücks 10 ein Dichtungsring 40 angeordnet, der den Ventilkolben 35 umschliesst und so die erste Leitung 11 bzw. den Leitungsabschnitt 13 gegenüber der Ausnehmung 17 abdichtet.

Das Absperrorgan 24 in der zweiten leitung 21 für das flüssige Monomer ist als Kugelventil ausgebildet, das in einer abgesetzten Bohrung 41 angeordnet ist, die in Querrichtung am Anschlussende des Handstücks 10 vorgesehen ist. Die Bohrung 41 hat einen erweiterten Abschnitt 42, der über den Abschnitt 23 der zweiten Leitung 21 mit dem Anschlussstutzen 22 in Verbindung steht und der an dem Absatz einen Ventilsitz 43 aufweist. An dem Ventilsitz 43 liegt unter der Wirkung einer Druckfeder 46 die Kugel 44 eines Kugelventils an, die durch einen ventilkolben 45 steuerbar ist. Der Ventilkolben 45 ist axial verstellbar in einem engeren Abschnitt 47 der abgesetzten Bohrung 41 gelagert. Der Ventilkolben 45 ist von einem Dichtungsring 50 umschlossen, der innerhalb des Gehäuses des Handstücks 10 angeordnet ist und den Raum des Kugelventils 43, 44 von der Ausnehmung 27 trennt, in der der einarmige Hebel 26 um die Achse 28 verschwenkbar gelagert ist und mit dem Ventilkolben 45 in Eingriff steht. Die Druckfeder 46 hält die Ventilkugel 44 in der Sperrstellung unter Anlage an dem Ventilsitz 43 und damit den einarmigen Hebel 26 unter Anlage an dem Stössel 29, der auf der dem Stössel 19 gegenüberliegenden Seite der Achse 30 mit dem Kippschalter 20 in Eingriff steht und diesen in der Ruhestellung gemäss Fig. 2 hält.

Zwischen dem Ventilsitz 43 und dem Dichtungsring 50 beginnt ein Leitungsabschnitt 48 der zweiten Leitung 21, der zu einem Kanal 49 führt, der als Kapillare für das flüssige Monomer innerhalb des zweiten Ausbringmundstücks 25 angeordnet ist. Wie aus Fig. 2 ersichtlich, ist der Kanal 49 ein Rohr, das in einen Kunststoffteil 51 eingebettet ist, der verformbar und/oder als selbständiger Teil an das Handstück 10 anschliessbar sein kann. Zweckmässigerweise ist der Kanal 49 abgewinkelt, so dass die Mündung 52 für den Austritt des flüssigen Monomers etwa unter einem Winkel von 90° zu der Mündung 32 bzw. der Ausbringrichtung des Polymers ausgerichtet ist. Die Achsen der Mündungen 32 und 52 können auch unter einem spitzen Winkel von beispielweise 60° verlaufen. Ausserdem ist die Mündung 52 für das flüssige Monomer gegenüber der Mündung 32 für das pulverförmige Polymer derart versetzt bzw. unter einem derartigen Abstand angeordnet, dass bei gleicher Ausrichtung auf einen bestimmten Arbeitsbereich bei allen Handhabungen eine Beaufschlagung des Polymer-Mundstücks 15 mit Monomer unterbunden ist. Das Ausbringmundstück 25 braucht nicht direkt oberhalb des Ausbringmundstücks 15 angeordnet zu sein, sondern kann gegenüber diesem auch seitlich versetzt angeordnet werden.

Der Innendurchmesser der ersten Leitung 11 für das Polymer liegt im Bereich von 1 bis 10 mm, vorzugsweise 2 bis 8 mm. Eine bevorzugte Ausführungsform ist 4 mm. Der Durchmesser der Mündung 32 liegt bei 1 bis 5 mm, vorzugsweise 2,5 mm. Der Innendurchmesser der zweiten Leitung 21 für das flüssige Monomer beträgt 0,5 bis 8 mm, vorzugsweise 1 bis 5 mm. Vorteilhafterweise liegt er bei 1 mm. Die Mündung 52 hat einen Innendurchmesser von vorzugsweise 0,1 bis 1,5 mm, insbesondere 0,3 bis 0,5 mm.

Bei dem dargestellten Ausführungsbeispiel sind zwei Spezialbehälter mit einem Fassungsvermögen von ca. 500 ml vorgesehen, die einen Speicher 53 für das pulverförmige Polymer und einen Vorratsbehälter 54 für das flüssige Monomer bilden. Der Speicher 53 steht über eine Schlauchleitung 55 mit dem Anschlussstutzen 12 und der Vorratsbehälter 54 über eine Schlauchleitung 56 mit dem Anschlussstutzen 22 in Verbindung. Innerhalb des Spezialbehälter, die nach unten trichterförmig zulaufen, wird kontinuierlich oder intermitierend ein Arbeitsdruck von 0,7 bar aufrechterhalten. Er kann zwischen 0,3 und 2 bar variiert werden.

Am Eingang des Polymer-Speichers 53 befindet sich ein nicht dargestelltes Sieb, das grössere Partikel als 0,8 mm zurückhält. Der Druck in dem Speicher 53 ist so gewählt, dass beim Öffnen des Absperrorgans 14 das pulverförmige Polymer nicht ruckartig herausschiesst, sondern eher rieselt oderin einem feinen Strahl herausgedrückt wird, je nach dem, wie weit das Absperrorgan 14 geöffnet wird. Durch den Kippschalter 20 lässt sich das Abheben des Ventilstössels 34 von dem Ventilsitz 33 feinfühlig dosieren.

Grundsätzlich können alle Polymere, die sich zur Herstellung von orthodontischen Apparaturen oder zur Reparatur von Prothesen eignen, verwendet werden. Es sind dies beispielsweise Polyvinylchlorid, Polystyrol, Polyamide, Epoxyverbindungen und Polyurethane, bzw. deren Mischpolymerisate, vorzugsweise werden als Polymere Acrylate und Methacrylate bzw. deren Mischpolymerisate verwendet. Besonders bevorzugte polymere Methacrylate sind Äthylmethacrylate und deren Copolymere. Die Korngrösse der verwendeten Polymerisate liegt zwischen 80 und 600 μm, vorzugsweise zwischen 120 und 350 μm, insbesondere zwischen 150 und 250 μm. Als Monomere kommen die monomeren Verbindungen der vorher genannten Polymeren in Betracht, aber auch die mono-, di- oder polyfunktionellen Verbindungen der Acrylate bzw. Methacrylate können Verwendung finden, soweit ihre Viskosität ein Passieren der Monomerdüse zulässt. Insbesondere aber wird Methylmethacrylat verwendet, das noch Zusätze von Katalysatoren, UV-Stabilisatoren sowie von di- bzw. polyfunktionellen Methacrylatverbindungen enthalten kann. Am Austrittsende des Vorratsbehälters für das Monomer kann ein Filter angeordnet sein, der eventuelle Verunreinigungen, die grösser als 5 µm sind, abfängt.

In der Ruhestellung der Vorrichtung, die in Fig. 2 gezeigt ist, sind beide Absperrorgane 14 und 24 geschlossen. Wird der Kippschalter 20 entgegen dem Uhrzeigersinn verschwenkt, wird der Stössel 19 und damit der Hebelarm 39 nach unten gedrückt. Der Hebel 16 schwenkt entgegen dem Uhrzeigersinn um die Achse 18, so dass der Nokken 38 unter Überwindung der Kraft der Druckfeder 36 den Ventilstössel 34 von dem Ventilsitz 33 abhebt, so dass das pulverförmige Polymer aus der Leitung 11 durch den Kippschalter 20 fein dosierbar durch die Mündung 32 auf den Arbeitsbereich abgegeben wird. Hierbei bleibt das Absperrorgan 24 geschlossen, so dass aus der Mündung 52 kein flüssiges Monomer austreten kann. Wird demgegenüber der Kippschalter 20 im Uhrzeigersinn verschwenkt, wird zunächst das Absperrorgan 14 geschlossen und anschliessend der Stössel 29 unter Verschwenken des einarmigen Hebels 26 heruntergedrückt. Dadurch wird der Ventilkolben 45 unter Überwindung der Kraft der Druckfeder 46 in Richtung der ventilkugel 44 bewegt, so dass diese von dem Ventilsitz 43 abhebt und flüssiges Monomer durch den Leitungsabschnitt 48 in die Kanal-Kapillare 49 fliessen und durch die Mündung 52 austreten kann. Bei diesen Arbeitsabläufen braucht das Handstück 10 nicht aus der Hand gelegt zu werden. Das zahntechnische Gerät, an das das Handstück 10 über die Schlauchleitungen 55 und 56 angeschlossen ist, kann eine Auflage für das Handstück 10 aufweisen, die einen Schalter umfasst, der nach dem Auflegen des Handstücks 10 die Druckbeaufschlagung des Speichers 53 und des Vorratsbehälters 54 stillsetzt.

Gemäss einem weiteren Ausführungsbeispiel ist die zweite Leitung 21 für das flüssige Monomer innerhalb des Handstücks 10 zwischen dem Anschlussstutzen 22 und der Kanal-Kapillaren 49 durchgehend ausgebildet und das zweite von dem Kippschalter 20 zu betätigende Absperrorgan in der Druckmittelleitung des Vorratsbehälters 54 für das flüssige Monomer angeordnet.

## Patentansprüche

1. Zahntechnische Vorrichtung zum Ausbringen von pulverförmigen Polymeren mit einem Pulverspeicher (53) und einem Ausbringsmundstück (15), dadurch gekennzeichnet, dass der Pulverspeicher (53) mindestens beim Ausbringen des Polymers unter Überdruck steht und mit dem Mundstück (15) über eine erste Leitung (11) verbunden ist, in der ersten Leitung (11) ein erstes Absperrorgan (14) angeordnet ist, eine zweite Leitung (21) für ein flüssiges Monomer mit einem zweiten Absperrorgan (24) versehen ist und einen mindestens beim Ausbringen des Monomers ebenfalls unter Überdruck stehenden Vorratsbehälter (54) für das flüssige Monomer mit einem zweiten Ausbringsmundstück (25) verbindet und die Mundstücke (15, 25) bei gleicher Ausrichtung auf einen Arbeitsbereich einen Abstand voneinander haben.

2. Vorrichtung nach Anspruch 1, dadurch gekennzeichnet, dass die beiden Absperrorgane (14, 24) und die beiden Mundstücke (15, 25) nebst zugeordneten Leitungsabschnitten (13, 23) in einem Handstück (10) zusammengefasst sind.

3. Vorrichtung nach Anspruch 1 oder 2, dadurch gekennzeichnet, dass die beiden Absperrorgane (14, 24) durch einen Kippschalter (20) betätigbar sind.

4. Vorrichtung nach einem der Ansprüche 1 bis 3, dadurch gekennzeichnet, dass das Handstück (10) bzw. die in diesem angeordneten Leitungen (11, 21) über Schlauchleitungen (55, 56) mit den Pulverspeicher (53) bzw. dem Vorratsbehälter (54) für das flüssige Monomer in Verbindung stehen.

5. Vorrichtung nach einem der Ansprüche 1 bis 4, dadurch gekennzeichnet, dass ein Kanal (31) und eine Mündung (32) des ersten Mundstücks (15) zum Ausbringen des pulverförmigen Polymers in Längsrichtung des Handstücks (10) ausgerichtet sind und an der in Richtung des Kanals (31) weisenden Seite der Mündung (32) ein Ventilsitz (33) ausgebildet ist, auf dem in der Sperrstellung ein Ventilstössel (34) ruht und der zusammen mit dem Ventilstössel (34) das erste Absperrorgan (14) bildet.

6. Vorrichtung nach Anspruch 5, dadurch gekennzeichnet, dass der Ventilstössel (34) an dem freien Ende eines Ventilkolbens (35) angeordnet ist, der innerhalb des Handstücks (10) in Längsrichtung gleitend geführt ist und unter der Wirkung einer Druckfeder (36) steht, die in der Sperrstellung den Ventilstössel (34) unter Anlage an dem Ventilsitz (33) hält, wobei der Ventilkolben (35) eine Ausnehmung (37) aufweist, in die ein Nocken (38) ragt, der durch den Kippschalter (20) zum Öffnen des ersten Absperrorgans (14) verstellbar ist.

7. Vorrichtung nach einem der Ansprüche 1 bis 6, dadurch gekennzeichnet, dass das zweite Mundstück (25) zum Ausbringen des flüssigen Monomers einen abgewinkelten Kanal (49) aufweist, dessen Mündung (52) das flüssige Monomer unter einem Winkel von 90° zu der Ausbringrichtung des Polymers abgibt.

8. Vorrichtung nach Anspruch 7, dadurch gekennzeichnet, dass in der zweiten Leitung (21) für das flüssige Monomer innerhalb des Handstücks (10) des zweites Absperrorgan (24) ein federbelastetes Kugelventil (43, 44) vorgesehen ist, das durch einen Ventilkolben (45) zu öffnen ist, der durch den Kippschalter (20) verstellbar ist.

9. Vorrichtung nach den Ansprüchen 7 und 8, dadurch gekennzeichnet, dass mindestens der Kanal (49) der zweiten Leitung (21) für das flüssige Monomer als Kapillare ausgebildet ist.

10. Vorrichtung nach einem der Ansprüche 7 bis 9, dadurch gekennzeichnet, dass die Kanal-Kapillare (49) in einem Kunststoffteil (51) angeordnet ist, der zusammen mit der Kanal-Kapillaren (49) bleibend verformbar und/oder auswechselbar ist.

11. Vorrichtung nach einem der Ansrpüche 1 bis 6, und 8 bis 10, dadurch gekennzeichnet, dass das zweite Mundstück (25) zum Ausbringen des flüssigen Monomers einen Kanal (49) aufweist, dessen Mündung (52) das Monomer unter einem spitzen Winkel zu der Ausbringrichtung des Polymers abgibt.

12. Zahntechnische Vorrichtung zum Ausbringen von pulverförmigen Polymeren mit einem Pulverspeicher (53) und einem Ausbringmundstück (15), dadurch gekennzeichnet, dass der Pulverspeicher (53) mindestens beim Ausbringen des Polymers unter Überdruck steht und mit dem Mundstück (15) über eine erste Leitung (11) verbunden ist, in der ersten Leitung (11) ein erstes Absperrorgan (14) angeordnet ist, eine zweite Leitung (21) für ein flüssiges Monomer einen beim Ausbringen des Monomers ebenfalls unter durch ein anderes Absperrorgan steuerbaren Überdruck stehenden Vorratsbehälter (54) für das flüssige Monomer mit einem zweiten Ausbringmundstück (25) verbindet und die Mundstücke (15, 25) bei gleicher Ausrichtung auf einen Arbeitsbereich einen Abstand voneinander haben.

13. Vorrichtung nach Anspruch 12, dadurch gekennzeichnet, dass das erste Absperrorgan (14) und die beiden Mundstücke (15, 25) nebst zugeordneten Leitungsabschnitten (13, 23) in einem Handstück (10) zusammengefasst sind, die beiden Absperrorgane durch einen Kippschalter (20) betätigbar sind, Schlauchleitungen (55, 56) gemäss Anspruch 4 vorgesehen sind, das erste Mundstück (15) und das erste Absperrorgan (14) gemäss Ansprüchen 5 und 6 ausgebildet sind und das zweite Mundstück gemäss Anspruch 7 oder 11 ausgebildet und angeordnet ist.

## Claims

1. Dental device for dispensing powdery polymers comprising a powder magazine (53) and a dispensing mouthpiece (15), characterized in that the powder magazine (53) is subjected to excess pressure at least during the dispensing of the polymer and is connected to the mouthpiece (15) via a first conduit (11), in the first conduit (11) a first shutoff means (14) is disposed, a second conduit (21) for a liquid monomer is provided with a second shutoff means (24) and connects to a second dispensing mouthpiece (25) a reservoir (54) for the liquid monomer which is likewise subjectd to excess pressure at least during dispensing of said monomer, and the mouthpieces (15, 25) with the same alignment with a working area are in spaced relationship with each other.

2. Device according to claim 1, characterized in that the two shutoff means (14, 24) and the two mouthpieces (15, 25) are combined together with associated conduit portions (13, 23) in hand piece (10).

3. Device according to claim 1 or 2, characterized in that the two shutoff means (14, 24) are actuable by a toggle switch (20).

4. Device according to any one of claims 1 to 3, characterized in that the hand piece (10) or the conduits (11, 21) disposed therein are connected via flexible tube conduits (55, 56) to the powder magazine (53) and the reservoir (54) for the liquid monomer respectively.

5. Device according to any one of claims 1 to 4, characterized in that a passage (31) and a mouth (32) of the first mouthpiece (15) are aligned for dispensing the powdery polymer in the longitudinal direction of the hand piece (10) and at the side of the mouth (32) pointing in the direction of the passage (31) a valve seat (33) is formed on which in the shutoff position a valve pushrod (34) rests and which forms together with the valve pushrod (34) the first shutoff means (14).

6. Device according to claim 5, characterized in that the valve pushrod (34) is disposed at the free end of a valve piston (35) which is guided slidingly longitudinally within the hand piece (10) and is subjected to the action of a pressure spring (36) which in the blocking position holds the valve pushrod (34) in engagement on the valve seat (33), the valve piston (35) comprising a recess (37) into which a cam (38) projects which is adjustable by the toggle switch (20) for opening the first shutoff means (14).

7. Device according to any one of claims 1 to 6, characterized in that the second mouthpiece (25) for dispensing the liquid monomer comprises an angled passage (49) whose mouth (52) dispenses the liquid monomer at an angle of 90° to the dispensing direction of the polymer.

8. Device according to claim 7, characterized in that the second conduit (21) for the liquid monomer within the hand piece (10) as second shutoff means (24) a spring-loaded ball valve (43, 44) is provided which is to be opened by a valve piston (45) which is adjustable by the toggle switch (20).

9. Device according to claims 7 and 8, characterized in that at least the passage (49) of the second conduit (21) for the liquid monomer is formed as capillary.

10. Device according to any one of Claims 7 to 9, characterized in that the passage capillary (49) is disposed in a plastic member (51) which together with the passage capillary (49) is permanently deformable and/or replaceable.

11. Device according to any one of claims 1 to 6 and 8 to 10, characterized in that the second mouthpiece (25) for dispensing the liquid monomer comprises a passage (49) whose mouth (52) dispenses the monomer at an acute angle to the dispensing direction of the polymer.

12. Dental device for dispensing powdery polymers comprising a powder magazine (53) and a dispensing mouthpiece (15), characterized in that the powder magazine (53) is subjected to excess pressure at least during the dispensing of the polymer and is connected to the mouthpiece (15) via a first conduit (11), in the first conduit (11) a first shutoff means (14) is disposed, a second conduit (21) for a liquid monomer connecting to a second dispensing mouthpiece (25) a reservoir (54) for the liquid monomer which is likewise subjected to excess pressure controllable by another shutoff means, and the mouthpieces (15, 25) with the same alignment with a working area are in spaced relationship with each other.

13. Device according to claim 12, characterized in that the fist shutoff means (14) and the two mouthpieces (15, 25) together with associated conduit portions (13, 23) are combined in a hand piece (10), the two shutoff means are actuable by a toggle switch (20), flexible tube conduits (55, 56) according to claim 4 are provided, the first mouthpiece (15) and the first shutoff means (14) are formed according to claims 5 and 6 and the second mouthpiece is formed and arranged according to claim 7 or 11.

## Revendications

1. Dispositif de technique dentaire destiné à débiter un polymère pulvérulent, comprenant un accumulateur de poudre (53) et un bec d'éjection (15), caractérisé en ce que l'accumulateur de poudre (53) est en surpression au moins au moment de l'éjection du polymère, et est relié au bec (15) par une première conduite (11), en ce qu'un premier organe obturateur (14) est agencé dans la première conduite (11), en ce qu'il est prévu une deuxième conduite (21) pour un monomère liquide et équipé d'un deuxième organe obturateur (24) et qui relie à un deuxième bec d'éjection (25), un réservoir (54) prévu pour le monomère liquide et qui est également sous surpression au moins lors de l'éjection du monomère, et en ce que, tout en étant dirigés de la même façon vers la zone de travail, les becs (15, 25) sont espacés l'un de l'autre.

2. Dispositif selon la revendication 1, caractérisé en ce que les deux organes obturateurs (14, 24) et les deux becs (15, 25), avec les segments de conduits (13, 23) qui leur sont associés, sont groupés dans une pièce à main (10).

3. Dispositif selon l'une des revendications 1 et 2, caractérisé en ce que les deux organes obturateurs (14, 24) peuvent être actionnés par un bouton de commande à bascule (20).

4. Dispositif selon l'une des revendications 1 à 3, caractérisé en ce que la pièce à main (10) ou les conduites (11, 21) agencés dans cette pièce sont en communication par des tuyaux (55, 56) avec l'accumulateur de poudre (53) et avec le réservoir (54) prévu pour le monomère liquide.

5. Dispositif selon l'une des revendications 1 à 4, caractérisé en ce qu'un canal (31) et un orifice (32) du premier bec (15) destiné à éjecter le polymère pulvérulent sont orientés dans la direction longitudinale de la pièce à main (10) et que, sur le côté de l'orifice (32) qui regarde vers le canal (31), est formé un siège de soupape (33) sur lequel un poussoir de soupape (34) repose dans la position d'obturation, et qui forme le premier organe obturateur (14) en combinaison avec le poussoir de soupape (34).

6. Dispositif selon la revendication 5, caractérisé en ce que le poussoir de soupape (34) est agencé à l'extrémité libre d'un piston de soupape (35) qui est guidé à coulissement dans la direction longitudinale à l'intérieur de la pièce à main (10) et est soumis à l'action d'un ressort de compression (36) qui, dans la position de fermeture, maintient le poussoir de soupape (34) appliqué contre le siège de soupape (33), le piston de soupape (35) présentant un évidement (37) dans lequel est engagé un bossage (38) qui peut être commandé pour l'ouverture du premier organe obturateur (14) par le bouton de commande à bascule (20).

7. Dispositif selon l'une des revendications 1 à 6, caractérisé en ce que le deuxième bec (25) présente, pour l'éjection du monomère liquide, un canal recourbé (49) dont l'orifice (52) débite le monomère liquide dans une direction formant un angle de 90° avec la direction d'éjection du polymère.

8. Dispositif selon la revendication 7, caractérisé en ce que, dans la deuxième conduite (21) prévue pour le passage du monomère liquide, il est prévu, à l'intérieur de la pièce à main (10), en qualité de deuxième organe obturateur (24), une soupape à bille (43, 44) chargée par un ressort, qui peut être ouverte par un piston de soupape (45) qui peut être commandé par le bouton de commande à bascule (20).

9. Dispositif selon l'une des revendications 7 et 8, caractérisé en ce qu'au moins le canal (49) de la deuxième conduite (21) prévue pour le passage du monomère liquide est constitué par un capillaire.

10. Dispositif selon l'une des revendications 7 à 9, caractérisé en ce que le capillaire formant canal (49) est disposé dans une pièce en matière plastique (51) qui peut subir une déformation plastique permanente conjointement avec le capillaire formant canal (49) et/ou peut être interchangeable conjointement avec ce capillaire.

11. Dispositif selon l'une des revendications 1 à 6 et 8 à 10, caractérisé en ce que le deuxième bec (25) destiné à éjecter le monomère liquide présente un canal (49) dont l'orifice (52) débite le monomère dans une direction formant un angle aigu avec la direction d'éjection du polymère.

12. Dispositif de technique dentaire destiné à débiter un polymère pulvérulent, comprenant un accumulateur de poudre (53) et un bec débiteur (15), caractérisé en ce que l'accumulateur de poudre (53) est en surpression au moins lors de l'éjection du polymère et est en communication avec le bec (15) par une première conduite (11), en ce qu'un premier organe obturateur (14) est agencé dans la première conduite (11), en ce qu'une deuxième conduite (21) prévue pour le passage d'un monomère liquide relie un réservoir (54) prévu pour le monomère liquide, et qui est également sous une surpression qui peut être commandée par un autre organe obturateur pendant l'éjection du monomère, à un deuxième bec d'éjection (25) et en ce que les becs (15, 25) sont situés à un certain écartement mutuel en se dirigeant de la même façon vers une zone de travail.

13. Dispositif selon la revendication 12, caractérisé en ce que le premier organe obturateur (14) et les deux becs (15, 25), avec les segments de conduites (13, 23) qui leur sont associés sont rassemblés en une pièce à main (10), en ce que les deux organes obturateurs peuvent être actionnés par un bouton de commande à bascule (20), en ce qu'il est prévu des tuyaux (55, 56) selon la revendication 4, en ce que le premier bec (15) et le premier organe obturateur (14) sont construits selon les revendications 5 et 6 et en ce que le deuxième bec est construit et agencé selon la revendication 7 ou la revendication 11.